(19) Europäisches Patentamt
European Patent Office
Office européen des brevets

(11) **EP 1 457 975 A2**

(12) **EUROPEAN PATENT APPLICATION**

(43) Date of publication:
**15.09.2004 Bulletin 2004/38**

(51) Int Cl.[7]: **G11B 7/09**

(21) Application number: **04002838.3**

(22) Date of filing: **09.02.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (71) Applicant: **Kabushiki Kaisha Toshiba**<br>**Tokyo (JP)** |
| (30) Priority: **27.02.2003 JP 2003051358** | (72) Inventor: **Takehara, Shintaro**<br>**Minato-ku Tokyo 105-8001 (JP)** |
| | (74) Representative: **Henkel, Feiler & Hänzel**<br>**Möhlstrasse 37**<br>**81675 München (DE)** |

(54) **Disk apparatus and signal processing method**

(57) A disk apparatus according to one aspect of this invention comprises a photodetection unit (210, 221, 222) configured to divisionally detect light reflected by the disk as a plurality of photodetection signals, and a tracking error signal generation unit (2) configured to generate a tracking error signal on the basis of a phase difference between the plurality of photodetection signals detected by the photodetection unit, wherein the tracking error signal generation unit includes an equalization unit (231, 232) configured to equalize waveforms of the plurality of photodetection signals detected by the photodetection unit, and the equalization unit has frequency-gain characteristics that obtain a gain of not less than 15 dB at a frequency corresponding to a shortest pit or mark.

FIG. 4

**EP 1 457 975 A2**

**Description**

The present invention relates to a disk apparatus and a signal processing method for generating a tracking error signal on the basis of, e.g., a DPD TE (Differential Phase Detection Tracking Error) detection method.

As disclosed in Jpn. Pat. Appln. KOKAI Publication No. 2001-34969, in a conventional optical disk such as a DVD-ROM or the like, light reflected by each pit or the edge of each mark formed on the optical disk is detected by a 4-split PD (Photo Detector), and the phase difference between the output signals from the respective PD areas is calculated to obtain a tracking error signal. The output signals from the PD areas at diagonal positions with respect to the PD center are added to each other by adders. Since sum signals lose their high-frequency components due to the OTF (Optical Transfer Function) of the optical disk, their waveforms are equalized by equalizers used to compensate for the lost high-frequency components, and the equalized signals are binarized by binarization circuits. By detecting the phase difference between the two binary signals obtained in this way, a phase error signal is obtained. The obtained phase error signal is filtered by an appropriate LPF (Low Pass Filter) to obtain a DPD TE signal.

In addition to the above method, the following methods may be used:

1) a method of equalizing the waveforms of output signals from respective PD areas by equalizers without any addition, independently calculating phase differences between neighboring PD areas in a direction corresponding to a pit array, and filtering the sum of the obtained phase error signals by an LPF; and
2) a method of calculating phase differences between PLL (Phase Locked Loop) clocks of an RF signal and equalized signals obtained by equalizing respective PD output signals by equalizers, and filtering a signal obtained by adding/subtracting the obtained phase error signals by an LPF.

Any of these methods use binary signals obtained by equalizing the waveforms of the PD output signals by the equalizers so as to obtain phase error signals. As the equalizers used to equalize the waveforms, high-pass filter type equalizers are normally used.

In recent years, optical disks which can store at higher density than the conventional optical disks have been studied and developed. Upon reproducing information from such an optical disk that can store at higher density, if the conventional equalizers are used, binarization is more likely to fail since the signal amplitude corresponding to the shortest pit or mark is small and is influenced by high-frequency components of noise. If binarization of only one of signals whose phases are to be compared has failed, the phases of output signals corresponding to an identical pit or mark edge cannot be compared, and a phase error signal with a length corresponding to a pulse which cannot be binarized and is omitted is erroneously output. As a result, a largely erroneous signal is output as a phase error signal.

As described above, with the conventional DPD TE signal generation method, when the recording density of information is increased, and the signal amplitude corresponding to the shortest pit or mark is reduced, binarization of signals whose phases are to be compared fails. Hence, a largely erroneous signal is output as a phase error signal, and a precise DPD TE signal cannot be obtained consequently.

It is an object of the present invention to provide a disk apparatus and a signal processing method, which can attain a precise binarization process.

A disk apparatus according to one aspect of the invention comprises a photodetection unit configured to divisionally detect light reflected by the disk as a plurality of photodetection signals, and a tracking error signal generation unit configured to generate a tracking error signal on the basis of a phase difference between the plurality of photodetection signals detected by the photodetection unit, wherein the tracking error signal generation unit includes an equalization unit configured to equalize waveforms of the plurality of photodetection signals detected by the photodetection unit, and the equalization unit has frequency-gain characteristics that obtain a gain of not less than 15 dB at a frequency corresponding to a shortest pit or mark.

An information processing method according to one aspect of the invention comprises divisionally detecting light reflected by the disk as a plurality of photodetection signals, equalizing waveforms of the plurality of detected photodetection signals by an equalizer having frequency-gain characteristics that obtain a gain of not less than 15 dB at a frequency corresponding to a shortest pit or mark, and generating a tracking error signal on the basis of a phase difference between the plurality of equalized signals.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a schematic block diagram showing an example (comparative example) of the arrangement of a signal processor of an optical disk apparatus;
FIG. 2 is a graph showing an example of the frequency-gain characteristics of an HPS equalizer shown in FIG. 1;

FIG. 3 is a chart showing an example of phase error pulses output from a phase comparator when binarization has failed;

FIG. 4 is a schematic block diagram showing an example of the arrangement of a signal processor of an optical disk apparatus according to the present invention;

FIG. 5 is a graph showing the frequency-gain characteristics of an HPS + LPF equalizer shown in FIG. 4;

FIG. 6 is a graph showing an example of the gains corresponding to $F_{max}$ and $3 \times F_{max}$ in the frequency-gain characteristics of the HPS + LPF equalizer shown in FIG. 4;

FIG. 7 is a flow chart showing the flow of a signal process by the signal processor shown in FIG. 4;

FIG. 8 is a schematic block diagram mainly showing an example of the arrangement of a recording system of the optical disk apparatus; and

FIG. 9 is a schematic block diagram mainly showing an example of the arrangement of a reproduction system of the optical disk apparatus.

Preferred embodiments of the present invention will be described hereinafter with reference to the accompanying drawings.

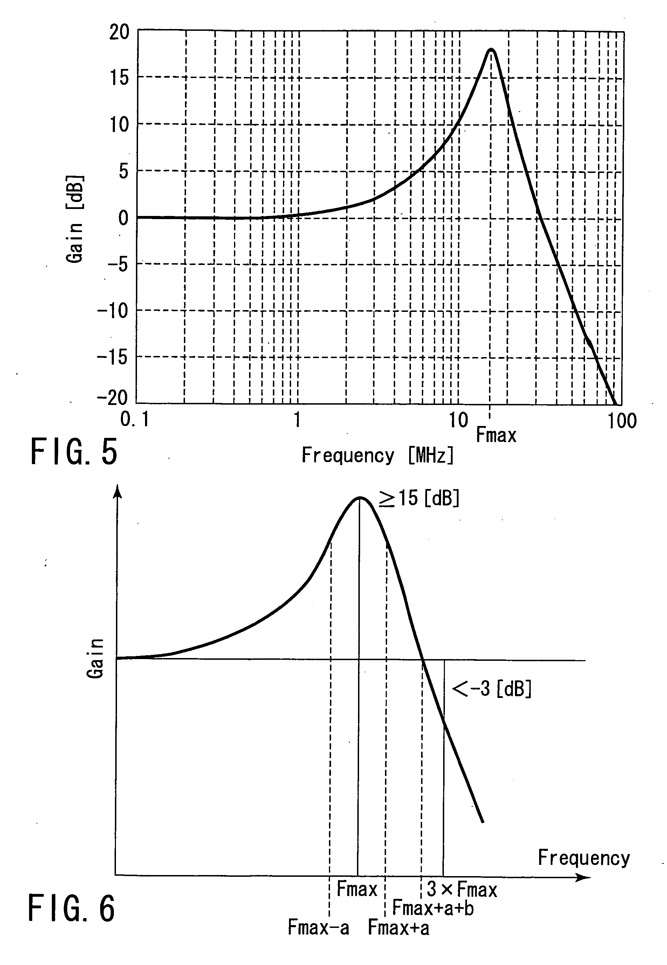

FIG. 4 is a schematic block diagram showing the arrangement of a tracking error signal generation circuit in an optical disk apparatus according to an embodiment of the present invention.

As shown in FIG. 4, a tracking error signal generation circuit 2 in the optical disk apparatus comprises equalizers 231 and 232, binarization circuits 241 and 242, a phase comparator 250, LPFs 261 and 262, a comparator 270, and a phase signal compensation circuit 280. The equalizer 231 includes a high-pass filter (HPS) 231a and a low-pass filter (LPF) 231b. The equalizer 232 includes a high-pass filter (HPS) 232a and a low-pass filter (LPF) 232b.

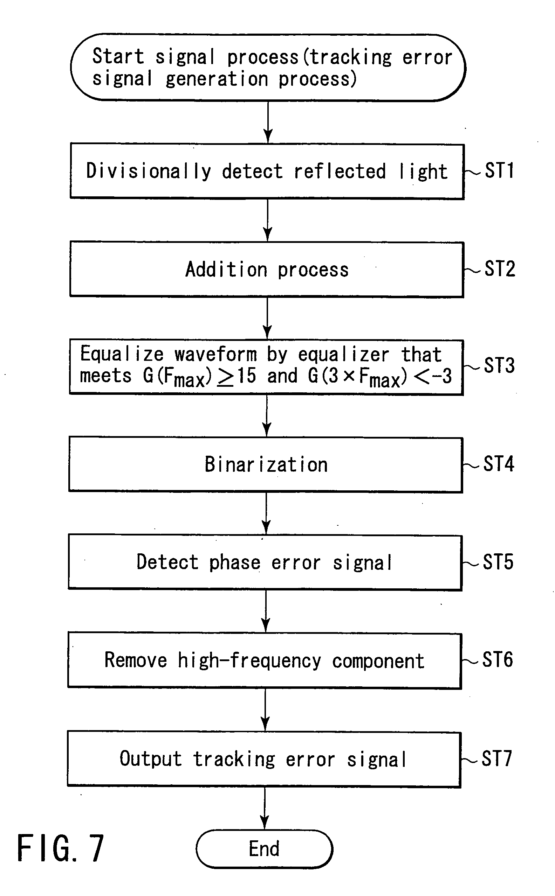

FIG. 7 is a flow chart showing the flow of a signal process focused on the tracking error signal generation circuit 2 of the optical disk apparatus shown in FIG. 4. The flow of the signal process focused on the tracking error signal generation circuit 2 will be described below with reference to FIGS. 4 and 7.

A 4-split PD 210 detects light reflected by the information recording surface of the optical disk (ST1). Adders 211 and 222 respectively add the outputs from two each PD cells of the 4-split PD 210, which are located at diagonal positions with respect to the center of the PD cells (ST2). The equalizer 231 equalizes the waveform of a signal output from the adder 221 (ST3). The equalizer 232 equalizes the waveform of a signal output from the adder 222 (ST3).

The specifications of the equalizers 231 and 232 are as follows. Let $F_{max}$ [Hz] be the frequency corresponding to the shortest pit or mark, and G(f) [dB] be the gain at a frequency f [Hz]. Then, the equalizers 231 and 232 satisfy the frequency-gain characteristics shown in FIG. 6. That is, the equalizers 231 and 232 satisfy:

$$G(F_{max}) \geq 15 \tag{1}$$

$$G(3 \times F_{max}) \leq -3 \tag{2}$$

The binarization circuit 241 binarizes the signal equalized by the equalizer 231 (ST4). The binarization circuit 242 binarizes the signal equalized by the equalizer 232 (ST4). The phase comparator 250 calculates the phase difference between the binary signals which are respectively binarized by the binarization circuits 241 and 242, and outputs a phase error signal (ST5). The LPF 261 removes a high-frequency component contained in the phase error signal output from the phase comparator 250 (ST6). The LPF 262 removes a high-frequency component contained in the phase error signal output from the phase comparator 250 (ST6). The comparator 270 compares the output signals from the LPFs 261 and 262 and outputs a DPD TE signal (ST7). Furthermore, the phase compensation circuit 280 outputs a phase-compensated signal.

When the recording density is increased and the signal amplitude at a frequency corresponding to the shortest pit or mark is small, the signal to noise ratio is insufficient, and noise of high-frequency components is not sufficiently smaller than the modulated component. For this reason, in the conventional apparatus, binarization fails, and wrong pulses are often output as a phase error signal to be output from the phase comparator.

For example, the current- and next-generation DVDs (Digital Versatile Disks) will be explained. The disk size of the next-generation DVD is equal to that of the current-generation DVD, but its storage capacity is larger than that of the current-generation DVD. That is, the recording density of the next-generation DVD is higher than that of the current-generation DVD. The next-generation DVD records data under the conditions of track pitch (Tp) = 0.4 μm, minimum pit pitch (Pp) = 0.102 μm, RLL = (1, 10), and 4/6 modulation (or 8/12 modulation). RLL is an abbreviation for run length limitation, and RLL = (1, 10) limits the upper limit of a runlength of channel bits "0" to 10, and the lower limit of a runlength to 1. That is, on the next-generation DVD which is recorded under the condition of RLL = (1, 10), channel bits "0" successively appear within the runlength range of 1 to 10. The current-generation DVD disk is recorded under the condition of RLL = (2, 10). That is, on the current-generation DVD which is recorded under the condition of RLL = (2, 10), channel bits "0" successively appear within the runlength range of 2 to 10. On these DVDs, a channel bit sequence is converted into pits or marks by a conventional scheme called NRZI (Non Return to Zero Invert). That is, the pit or mark length corresponding to a channel bit becomes shorter with decreasing lower limit of a run of channel bits "0". Upon comparison between the current- and next-generation DVDs, the next-generation DVD has a narrower track pitch and a shorter minimum pit pitches than those of the current-generation DVD, also former shortest pit or mark length is shorter than that of later. On the next-generation DVD recorded under the condition of RLL = (1, 10), a pit or mark corresponding to channel bits "101010..." is the shortest pit or mark. When channel bits "101010..." are converted by NRZI, the period of the converted signal is 2T. On the other hand, 4/6 modulation is a modulation scheme for converting 4-bit data into 6 channel bits. Likewise, 8/12 modulation is a modulation scheme for converting 8-bit data into 12 channel bits. The current-generation DVD adopts 8/16 modulation. The conventional apparatus cannot appropriately binarize signals read out from the next-generation DVD which can store at higher density than the above current-generation DVD.

To solve the above drawbacks, the aforementioned specifications are used as the equalizers 231 and 232 used in the tracking error signal generation circuit 2. As a result, even when the recording density is increased (even on the next-generation DVD), each equalizer can assure a sufficient signal amplitude, and can reduce noise of high-frequency components.

The equalizers 231 and 232 have frequency-gain characteristics that obtain a gain of 15 dB or higher at a frequency corresponding to the shortest pit or mark. At this time, the gain is preferably higher as long as it is 15 dB or higher. However, even when the gain is lower than 15 dB, if it assumes a value in the neighborhood of 15 dB, an accurate binarization process can be assured. For example, the experimental results reveal that a signal read out from the aforementioned next-generation DVD can be accurately binarized using the equalizers 231 and 232 which have frequency-gain characteristics that obtain a gain within the range from 10 dB to 20 dB (both inclusive) at a frequency corresponding to the shortest pit or mark. More specifically, the following results are obtained: a residual error with respect to the signal amplitude of DPD is 1/10 or less, and the reproduction signal error rate is $1 \times 10^{-5}$ channel bits.

The equalizers 231 and 232 have frequency-gain characteristics that obtain a gain of -3 dB or less at a frequency three times the frequency corresponding to the shortest pit or mark. At this time, the gain is preferably lower as long as it is -3 dB or lower. However, if the gain is higher than -3 dB, if it assumes a value in the neighborhood of -3 dB, an accurate binarization process can be assured. For example, the experimental results reveal that a signal read out from the aforementioned next-generation DVD can be accurately binarized using the equalizers 231 and 232 which have frequency-gain characteristics that obtain a gain within the range from -1 dB to -20 dB (both inclusive) at a frequency three times the frequency corresponding to the shortest pit or mark. More specifically, the following results are obtained:

　　a residual error with respect to the signal amplitude of DPD is 1/10 or less, and the reproduction signal error rate is $1 \times 10^{-5}$ channel bits.

The equalizer 231 with the above specifications can be implemented by adopting a two-stage arrangement, i.e., the HPS 231a and LPF 231b. Likewise, the equalizer 232 with the above specifications can be implemented by adopting a two-stage arrangement, i.e., the HPS 232a and LPF 232b.

The HPSs 231a and 232a are used to compensate for high-frequency components which are lost by the OTF of the optical disk. The LPFs 231b and 232b are used to compensate for frequency components which are lost by the OTF of the optical disk, and to remove the influences of laser noise inherent to a reproduction signal of the optical disk, shot noise of the PD, heat noise of an operational amplifier, and the like.

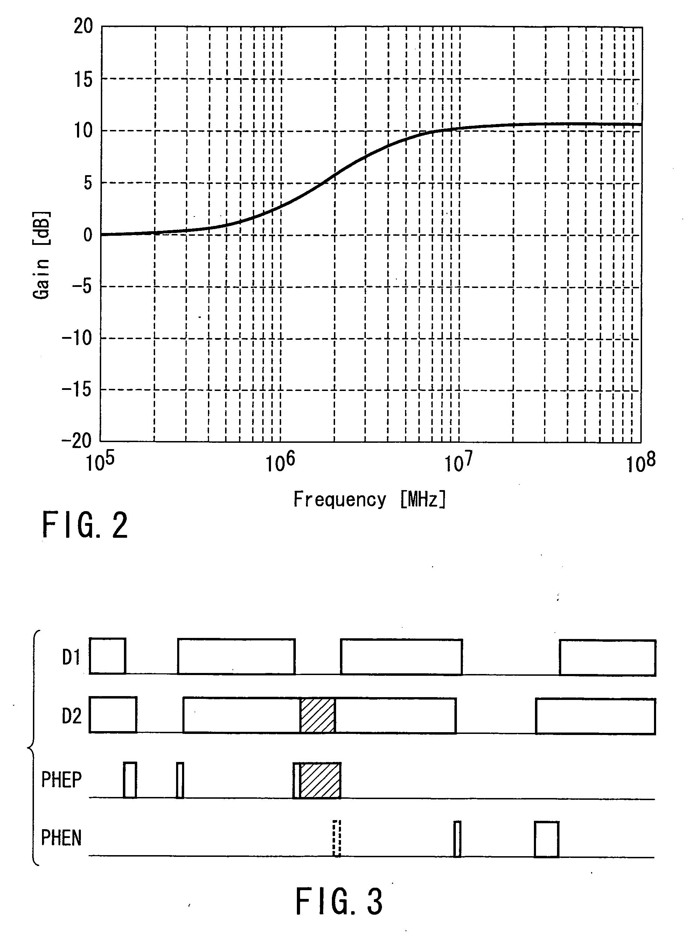

As shown in FIG. 2, the HPSs 231a and 232a have frequency-gain characteristics in which flat parts appear in the high- and low-frequency ranges. That is, the HPSs 231a and 232a have frequency-gain characteristics in which the gain is constant within a first frequency range equal to or lower than a first frequency, the gain is constant within a second frequency range equal to or higher than a second frequency which is equal to or higher than the first frequency, and the gain increases within a third frequency range between the first and second frequencies. Let $F_s$ [MHz] be a frequency at which the reproduction signal amplitude is saturated. Then, the HPSs 231a and 232a are filters which have gains of $\pm 3$ dB from the flat parts in the high- and low-frequency ranges of the frequency-gain characteristics at frequencies respectively given by:

$$Fc1_{HPS} = \alpha \times F_{max} \qquad\qquad (3)$$

$$Fc2_{HPS} = \beta \times F_s \tag{4}$$

where coefficients $\alpha$ and $\beta$ are appropriately determined in correspondence with the recording density and modulation symbol to have values within the ranges:

$$0.5 \leq \alpha \leq 1.5 \tag{5}$$

$$0.5 \leq \beta \leq 1.5 \tag{6}$$

On the other hand, the LPFs 231b and 232b have, as a cutoff frequency, a frequency given by:

$$Fc_{LPF} = F_{max} \tag{7}$$

and satisfy the value of Q given by:

$$Q \geq 2.0 \tag{8}$$

where Q is the attenuation amount. The value Q is appropriately determined in correspondence with the recording density and modulation symbol.

A case will be exemplified below wherein the channel frequency is 63.84 MHz, the shortest pit length is 2T, and a pit at which the reproduction signal amplitude is saturated is 8T. That is, a case will be exemplified below wherein the ratio of the shortest pit or mark to a pit or mark at which the reproduction signal amplitude is saturated is 2 : 8. At this time, $F_{max}$ = 16.0 [MHz] and $F_s$ = 3.99 [MHz].

By adopting $\alpha$ = 0.7 and $\beta$ = 0.9, the transfer function of each of the HPSs 231a and 232a is described by:

$$H_{HPS} = \frac{1 + 3.99 \times 10^{-8}s}{1 + 1.25 \times 10^{-8}s} \tag{9}$$

On the other hand, when a quadratic LPF is used as the LPFs 231b and 232b and Q = 3.0, transfer function $H_{LPF}$ of each of the LPFs 231b and 232b is described by:

$$H_{LPF} = \frac{1}{1 + \left(\frac{1}{Q\omega_0}\right)s + \left(\frac{1}{\omega_0^2}\right)s^2}$$

$$= \frac{1}{1 + 3.32 \times 10^{-9}s + 9.94 \times 10^{-17}s^2} \tag{10}$$

As a result, transfer function $H_{total}$ of each of the equalizers 231 and 232 as a whole is described by:

$$H_{total} = \frac{1 + 3.99 \times 10^{-8}s}{1 + 1.58 \times 10^{-8}s + 1.41 \times 10^{-16}s^2 + 1.24 \times 10^{-24}s^3} \tag{11}$$

Note that s in equations 9, 10, and 11 is a complex frequency, and is defined by s = j$\omega$. The frequency-gain

characteristics of the transfer function indicated by complex frequency s become the absolute value (corresponding to a length on a Gaussian space specified by the x- and y-axes that respectively plot the real and imaginary parts) of a value (complex number) of the transfer function at ω. In this connection, the phase becomes an angle on the Gaussian space.

FIG. 5 shows the characteristics of the equalizers 231 and 232. That is, the equalizers 231 and 232 have characteristics respectively given by:

$$G(F_{max}) = 17.8 \tag{12}$$

$$G(3 \times F_{max)} = -8.23 \tag{13}$$

The fact that the equalizers 231 and 232 satisfy inequalities 12 and 13 means that they satisfy inequalities 1 and 2.

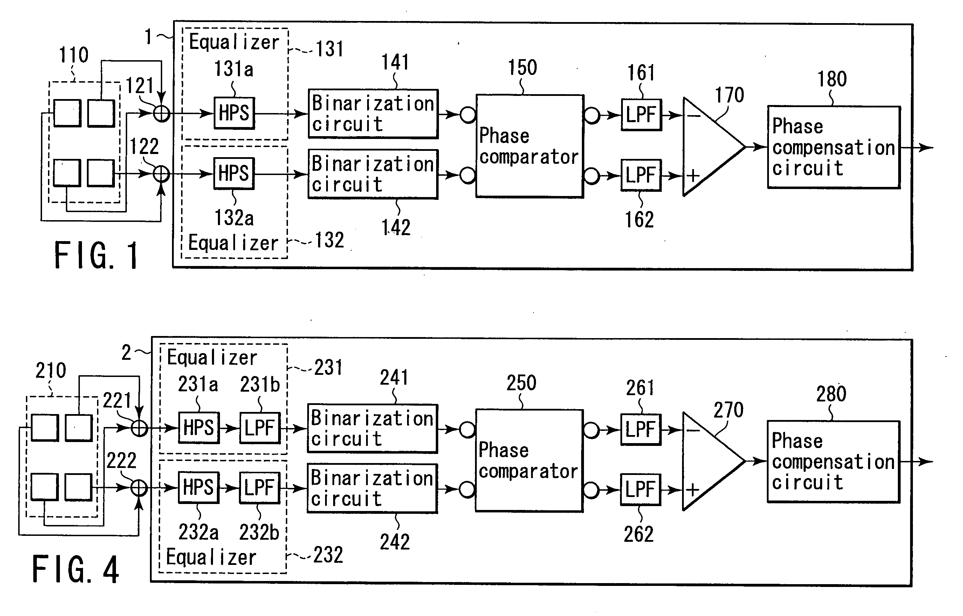

The accuracy of a tracking error signal generated by a tracking error signal generation circuit 1 shown in FIG. 1 will be compared with that of a tracking error signal generated by the tracking error signal generation circuit 2 shown in FIG. 4. The tracking error signal generation circuit 1 shown in FIG. 1 comprises equalizers 131 and 132, binarization circuits 141 and 142, a phase comparator 150, LPFs 161 and 162, a comparator 170, and a phase compensation circuit 180. The equalizer 131 includes a high-pass filter (HPS) 131a. The equalizer 132 includes a high-pass filter (HPS) 132a.

The frequency-gain characteristics of the equalizers 131 and 132 (LPFs 161 and 162) of the tracking error signal generation circuit 1 shown in FIG. 1 are as shown in FIG. 2. When the equalizer that exhibits the frequency-gain characteristics shown in FIG. 2 is used, binarization is more likely to fail since the signal amplitude corresponding to the shortest pit or mark is small and is influenced by high-frequency components of noise. If binarization of only one of signals whose phases are to be compared has failed, as shown in FIG. 3, the phases of output signals corresponding to an identical pit or mark edge cannot be compared, and a phase error signal with a length corresponding to a pulse (hatched portion of D2 in FIG. 3) which cannot be binarized and are omitted is erroneously output (hatched portion of PHEP in FIG. 3). As a result, a largely erroneous signal is output as a phase error signal.

By contrast, since the equalizers 231 and 232 of the tracking error signal generation circuit 2 shown in FIG. 4 adopt an HPS + LPF arrangement, the probability of binarization failures lowers, and a wrong phase error signal is not output. As a result, even when the recording density is improved, an accurate tracking error signal can be generated.

In the above description, the equalizers 231 and 232 adopt an HPS + LPF arrangement, but the present invention is not limited to such a specific arrangement. For example, each of the equalizers 231 and 232 may comprise at least one of a transversal filter and high-order filter, as long as it has characteristics that satisfy inequalities 1 and 2.

As described above, the tracking error signal generation circuit of the present invention can attain an accurate binarization process (the probability of binarization failures is low), and hardly outputs a wrong phase error signal. As a result, even when the recording density is improved, an accurate tracking error signal can be generated.

The relationship between $F_{max}$ and the shortest pit or mark will be explained below. In the above description, the frequency corresponding to the shortest pit or mark is $F_{max}$. However, the present invention is not limited to this. The frequency corresponding to the shortest pit or mark may often deviate from $F_{max}$. As shown in FIG. 6, the frequency corresponding to the shortest pit or mark falls within the range from $F_{max}$ to $F_{max}$ + a in some cases. Or the frequency corresponding to the shortest pit or mark falls within the range from $F_{max}$ to $F_{max}$ + a + b in some cases. Or the frequency corresponding to the shortest pit or mark falls within the range from $F_{max}$ to $F_{max}$ - a in some cases. Even when the frequency corresponding to the shortest pit or mark recorded on the next-generation DVD deviates from $F_{max}$, accurate binarization can be attained by the equalizers 231 and 232.

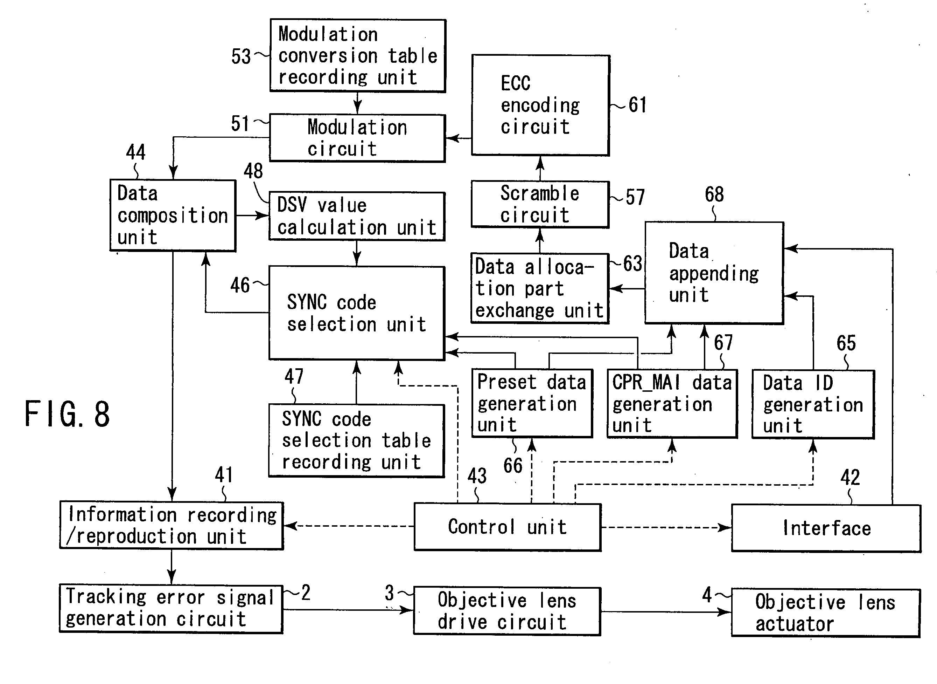

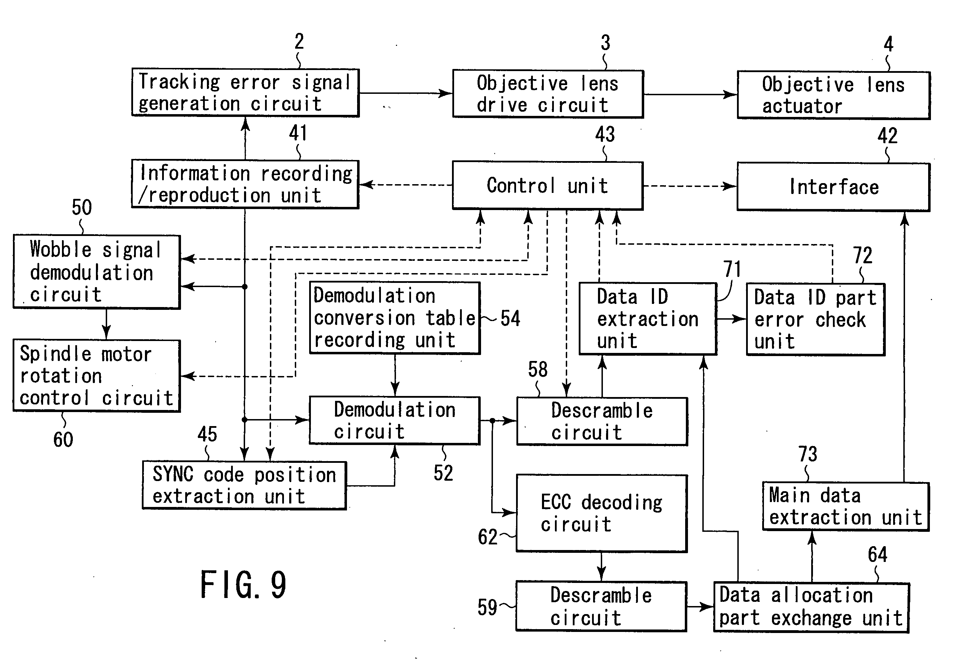

An example of an optical disk apparatus to which the tracking error signal generation circuit 2 shown in FIG. 4 (or the tracking error signal generation circuit 1 shown in FIG. 1) is applied will be explained below with reference to FIGS. 8 and 9. FIG. 8 mainly shows the recording system of the optical disk apparatus, and FIG. 9 mainly shows the reproduction system of the optical disk apparatus.

An information recording/reproduction unit 41 shown in FIGS. 8 and 9 includes the 4-split PD 210 and adders 221 and 222 (or a 4-split PD 110 and adders 121 and 122). That is, the information recording/reproduction unit 41 supplies signals from the adders 221 and 222 (adders 121 and 122) to the tracking error signal generation circuit 2 (tracking error signal generation circuit 1). The tracking error signal generation circuit 2 (tracking error signal generation circuit 1) supplies a tracking error signal output from the phase compensation circuit 280 (phase compensation circuit 80) to an objective lens drive circuit 3. The objective lens drive circuit 3 drives an objective lens in the tracking direction (disk radial direction) on the basis of the tracking error signal.

The recording system will be mainly explained below with reference to FIG. 8. As shown in FIG. 8, an interface 42 fetches data. The fetched data is supplied to a data appending unit 68. The data appending unit 68 appends a Data ID, IED, Data Type, Preset Data, CPR_MAI, and EDC to main data. A data ID generation unit 65 generates a data ID which is supplied to the data appending unit 68. A CPR_MAI data generation unit 67 outputs data associated with copy protection, which is supplied to the data appending unit 68. Also, a preset data generation unit 66 outputs preset data, which is supplied to the data appending unit 68. The data output from the data appending unit 68 undergoes a predetermined data allocation process by a data allocation part exchange unit 63, and its main data part undergoes a scramble process by a scramble circuit 57. An ECC encoding circuit 61 appends PO and PI data to the output from the scramble circuit 57 and interleaves the PO data. ECC blocks obtained as a result of this process are input to a modulation circuit 51 and are converted into a modulated signal. At this time, a modulation code is selected from a modulation conversion table recording unit 53 in accordance with input data. A data composition unit 44 appends a SYNC Code to the modulated data from the modulation circuit 51. The SYNC code is selected by a SYNC Code selection unit 46 from a SYNC Code selection table recording unit 47. Upon this selection, a DSV value calculation unit 48 controls selection of the SYNC Code so that the runlengths of "0"s and "1"s fall within a predetermined range at a continuous part between the SYNC Code and data. The data composition unit 44 supplies a recording signal to the information recording/reproduction unit 41. A control unit 43 systematically controls all other blocks.

Next, the reproduction system will be mainly explained below with reference to FIG. 9. As shown in FIG. 9, a signal output from the information recording/reproduction unit 41 is input to a wobble signal demodulation circuit 50, SYNC Code position extraction unit 45, and demodulation circuit 52. A wobble signal demodulated by the wobble signal demodulation circuit 50 serves as, e.g., a reference signal for a spindle motor rotation control circuit 60. A SYNC Code extracted by the SYNC Code extraction unit 45 is used to control the timing of the demodulation circuit 52. The demodulation circuit 52 demodulates the modulated signal using a conversion table recorded in a demodulation conversion table recording unit 54. The demodulated signal is input to an ECC decoding circuit 62. The ECC decoding circuit 62 executes a decode process of ECC blocks. That is, the ECC decoding circuit 62 deinterleaves the PO data, and executes an error correction process using the PO (16 bytes) and PI (10 bytes) data. A descramble circuit 59 descrambles a main data part. A data allocation part exchange unit 64 restores exchanged rows of right and left blocks to their original block allocation positions. In this state, a main data extraction unit 73 can extract demodulated main data, which is output via the interface 42. The output from the data allocation part exchange unit 64 is supplied to a data ID extraction unit 71. The extracted data ID is input to the control unit 43 as recognition data and timing data. The data ID is partially descrambled by a descramble circuit 58. Also, the data ID undergoes an error check process in an error check unit 72. If an abnormal ID is found, the control unit 43 executes a data fetch process again.

## Claims

1. A disk apparatus for reproducing a disk on which information is recorded by pits or marks with various lengths, **characterized by** comprising:

   a photodetection unit (210, 221, 222) configured to divisionally detect light reflected by the disk as a plurality of photodetection signals; and
   a tracking error signal generation unit (2) configured to generate a tracking error signal on the basis of a phase difference between the plurality of photodetection signals detected by the photodetection unit,

   wherein the tracking error signal generation unit includes:

   an equalization unit (231, 232) configured to equalize waveforms of the plurality of photodetection signals detected by the photodetection unit, and
   the equalization unit has frequency-gain characteristics that obtain a gain of not less than 15 dB at a frequency corresponding to a shortest pit or mark.

2. An apparatus according to claim 1, **characterized in that** the equalization unit has frequency-gain characteristics that obtain a gain of not more than -3 dB at a frequency three times the frequency corresponding to the shortest pit or mark.

3. An apparatus according to claim 1, **characterized in that** the equalization unit includes:

   a high-pass filter having frequency-gain characteristics in which a gain is constant within a first frequency range not more than a first frequency, a gain is constant within a second frequency range not less than a second frequency which is more than the first frequency, and a gain increases in a third frequency band between the first and second frequencies, and
a low-pass filter having frequency-gain characteristics in which a gain attenuates within a fourth frequency band not less than a third frequency.

4. An apparatus according to claim 2, **characterized in that** the equalization unit includes:

a high-pass filter having frequency-gain characteristics in which a gain is constant within a first frequency range not more than a first frequency, a gain is constant within a second frequency range not less than a second frequency which is more than the first frequency, and a gain increases in a third frequency band between the first and second frequencies, and
a low-pass filter having frequency-gain characteristics in which a gain attenuates within a fourth frequency band not less than a third frequency.

5. An apparatus according to claim 4, **characterized in that** the first frequency range is a frequency range 0.5 to 1.5 times a frequency corresponding to a pit or mark with which a reproduction signal amplitude saturates,
the second frequency range is a frequency range 0.5 to 1.5 times the frequency corresponding to the shortest pit or mark,
the third frequency matches the frequency corresponding to the shortest pit or mark, and
a Q value of the low-pass filter is not less than 2.

6. An apparatus according to claim 1, **characterized in that** a transfer function H of the equalization unit is given by:

$$H = (1+3.99\times10^{-8}s)/$$

$$(1+1.58\times10^{-8}s+1.41\times10^{-16}s^2+1.24\times10^{-24}s^3)$$

$$s = j\omega \text{ (complex frequency)}$$

7. An apparatus according to claim 5, **characterized in that** a ratio of the shortest pit or mark to the pit or mark for which the reproduction signal amplitude saturates is 2 : 8.

8. An apparatus according to claim 1, **characterized in that** the gain at the frequency corresponding to the shortest pit or mark is not less than 0.

9. An information processing method for processing a signal read out from a disk on which information is recorded by pits or marks with various lengths, **characterized by** comprising:

divisionally detecting (ST1) light reflected by the disk as a plurality of photodetection signals;
equalizing (ST3) waveforms of the plurality of detected photodetection signals by an equalizer having frequency-gain characteristics that obtain a gain of not less than 15 dB at a frequency corresponding to a shortest pit or mark; and
generating (ST7) a tracking error signal on the basis of a phase difference between the plurality of equalized signals.

10. A method according to claim 9, **characterized in that** the equalizer has frequency-gain characteristics that obtain a gain of not more than -3 dB at a frequency three times the frequency corresponding to the shortest pit or mark.

11. A method according to claim 9, **characterized in that** the equalizer includes:

a high-pass filter having frequency-gain characteristics in which a gain is constant within a first frequency range not more than a first frequency, a gain is constant within a second frequency range not less than a second frequency which is more than the first frequency, and a gain increases in a third frequency band between the first and second frequencies, and
a low-pass filter having frequency-gain characteristics in which a gain attenuates within a fourth frequency band not less than a third frequency.

**12.** A method according to claim 10, **characterized in that** the equalizer includes:

a high-pass filter having frequency-gain characteristics in which a gain is constant within a first frequency range not more than a first frequency, a gain is constant within a second frequency range not less than a second frequency which is more than the first frequency, and a gain increases in a third frequency band between the first and second frequencies, and
a low-pass filter having frequency-gain characteristics in which a gain attenuates within a fourth frequency band not less than a third frequency.

**13.** A method according to claim 12, **characterized in that** the first frequency range is a frequency range 0.5 to 1.5 times a frequency corresponding to a pit or mark with which a reproduction signal amplitude saturates,
the second frequency range is a frequency range 0.5 to 1.5 times the frequency corresponding to the shortest pit or mark,
the third frequency matches the frequency corresponding to the shortest pit or mark, and
a Q value of the low-pass filter is not less than 2.

**14.** A method according to claim 9, **characterized in that** a transfer function H of the equalizer is given by:

$$H = (1+3.99 \times 10^{-8} s)/$$

$$(1+1.58 \times 10^{-8} s+1.41 \times 10^{-16} s^2+1.24 \times 10^{-24} s^3)$$

$$s = j\omega \text{ (complex frequency)}$$

**15.** A method according to claim 13, **characterized in that** a ratio of the shortest pit or mark to the pit or mark for which the reproduction signal amplitude saturates is 2 : 8.

**16.** A method according to claim 9, **characterized in that** the gain at the frequency corresponding to the shortest pit or mark is not less than 0.

FIG. 1

FIG. 4

EP 1 457 975 A2

FIG. 2

FIG. 3

FIG. 5

FIG. 6

**Start signal process (tracking error signal generation process)**

↓

| Divisionally detect reflected light | ~ST1 |

↓

| Addition process | ~ST2 |

↓

| Equalize waveform by equalizer that meets $G(F_{max}) \geq 15$ and $G(3 \times F_{max}) < -3$ | ~ST3 |

↓

| Binarization | ~ST4 |

↓

| Detect phase error signal | ~ST5 |

↓

| Remove high-frequency component | ~ST6 |

↓

| Output tracking error signal | ~ST7 |

↓

**End**

## FIG. 7

FIG. 8

Modulation conversion table recording unit 53

Modulation circuit 51

DSV value calculation unit 48

SYNC code selection unit 46

SYNC code selection table recording unit 47

ECC encoding circuit 61

Scramble circuit 57

Data allocation part exchange unit 63

Preset data generation unit 66

Data composition unit 44

Data appending unit 68

Data ID generation unit 65

CPR_MAI data generation unit 67

Interface 42

Control unit 43

Information recording /reproduction unit 41

Objective lens drive circuit 3

Objective lens actuator 4

Tracking error signal generation circuit 2

FIG. 9